(19) Europäisches Patentamt
European Patent Office
Office européen des brevets

(11) Numéro de publication: **0 494 554 B1**

(12) **FASCICULE DE BREVET EUROPEEN**

(45) Date de publication de fascicule du brevet: **15.03.95**

(51) Int. Cl.[6]: **C08F 220/56**

(21) Numéro de dépôt: **91403317.0**

(22) Date de dépôt: **09.12.91**

# (54) Nouveaux copolymères cationiques, de nouvelles émulsions et leur application.

(30) Priorité: **09.01.91 FR 9100190**

(43) Date de publication de la demande:
**15.07.92 Bulletin 92/29**

(45) Mention de la délivrance du brevet:
**15.03.95 Bulletin 95/11**

(84) Etats contractants désignés:
**BE DE FR GB IT NL**

(56) Documents cités:
**WO-A-88/07559**
**FR-A- 1 406 594**

(73) Titulaire: **SOCIETE FRANCAISE HOECHST**
**TOUR ROUSSEL HOECHST**
**1 Terrasse Bellini**
**F-92800 Puteaux (FR)**

(72) Inventeur: **Righetti, Roland**
**82, rue de Verdun**
**F-94500 Champigny sur Marne (FR)**
Inventeur: **Cabestany, Jean**
**127, boulevard Maxime Gorki**
**F-93240 Stains (FR)**

(74) Mandataire: **Rinuy, Santarelli**
**14, avenue de la Grande Armée**
**F-75017 Paris (FR)**

**EP 0 494 554 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne de nouveaux copolymères cationiques, de nouvelles émulsions et leur application.

Les émulsions cationiques sont largement utilisées dans les assouplissants ménagers modernes qui contiennent généralement de 2 à 25 % en poids d'un ammonium quaternaire insoluble dans l'eau associé à un ou plusieurs émulsifiants non-ioniques stabilisants.

La viscosité des assouplissants ménagers est habituellement inférieure à 100 mPa.s, à 20° C, or le marché est demandeur d'assouplissants plus visqueux : environ 200 mPa.s ou plus, afin de donner aux consommateurs l'impression d'onctuosité qu'ils associent à un meilleur pouvoir adoucissant et assouplissant.

Les épaississants classiques : dérivés de la cellulose, gomme xanthane, gomme de guar, polymères hydrosolubles non réticulés ou légèrement réticulés, présentés éventuellement en émulsion auto-reversible eau dans huile, etc... ne donnent pas entière satisfaction car, soit ils se présentent sous forme de poudre difficile à dissoudre parfaitement, soit ils sont incompatibles avec la dispersion cationique, soit ils fournissent des milieux épaissis présentant une filance plus ou moins prononcée, soit enfin, ils conduisent à des milieux épaissis instables dans le temps : démixtion, formation de marbrures, et/ou de dépôts. Or, la demanderesse a découvert de nouveaux dérivés, utilisables notamment sous forme d'émulsions, obviant à ces inconvénients et présentant de plus les avantages suivants :

- possibilité de présentation liquide fluide, facile à manipuler et à mettre en oeuvre,
- sensibilité faible au cisaillement sous forme d'émulsion,
- bonne stabilité au stockage : sédimentation et relargage faibles,
- odeur sui generis peu marquée n'altérant pas le parfum du produit fini,
- rhéologie peu ou pas filante.

C'est pourquoi la présente demande a pour objet de nouveaux copolymères cationiques insolubles dans l'eau, caractérisés en ce qu'ils sont à base d'acrylamide et d'un monomère cationique de formule générale (I)

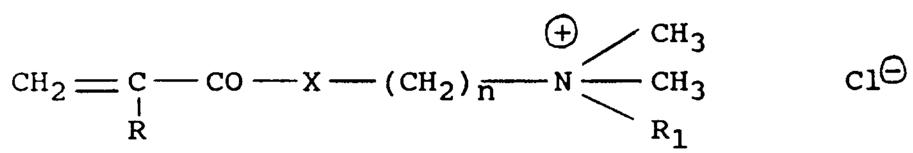
(I)

dans laquelle R et $R_1$, identiques ou différents, représentent un atome d'hydrogène ou un groupement méthyle, X représente un atome d'oxygène ou un radical NH et n représente 2 ou 3, contenant en proportions molaires de 5 à 30 % de motifs cationiques, et réticulés avec de 50 à 100 ppm d'acide bisacrylamidoacétique par rapport au poids du copolymère.

L'invention a notamment pour objet les copolymères ci-dessus décrits, caractérisés en ce que lesdits copolymères sont réticulés avec environ 100 ppm d'acide bisacrylamidoacétique, désigné ci-après ABAA par rapport au poids de copolymère .

L'invention a plus particulièrement pour objet les copolymères tels que définis ci-dessus dans lesquels le monomère de formule générale (I) est, soit l'acrylate de diméthylaminoéthyle salifié par de l'acide chlorhydrique, désigné ci-après CHA, soit l'acrylate de diméthylaminoéthyle quaternisé avec du chlorure de méthyle, désigné ci-après CMA, soit enfin le chlorure de méthacrylamidopropyltriméthylammonium, désigné ci-après MAPTAC. Avantageusement, le monomère cationique est le CMA. Parmi ces derniers produits, l'invention a notamment pour objet ceux contenant, soit un copolymère AAM-CMA, 92-8 en proportions molaires, de préférence réticulé avec 100 ppm d'ABAA, soit un copolymère AAM-CMA, 80-20 en proportions molaires, de préférence réticulé également avec 100 ppm d'ABAA. On désigne par AAM l'acrylamide.

Les copolymères cationiques selon la présente invention peuvent être obtenus à partir des monomères et de l'agent réticulant correspondants, par polymérisation radicalaire, en suspension eau dans huile en présence d'un ou plusieurs agents stabilisants et d'un ou plusieurs générateurs de radicaux libres, à une température comprise entre +10° C et +100° C.

Le copolymère cationique réticulé est insoluble dans l'eau mais gonflable à l'eau. Il est avantageusement présenté sous forme d'une émulsion auto-reversible eau dans huile. Il est alors présent dans la phase aqueuse dispersée dont il représente avantageusement environ entre 35 et 45 % de son poids.

C'est pourquoi la présente demande a également pour objet une émulsion auto-reversible eau dans huile, caractérisée en ce qu'elle renferme un copolymère cationique tel que défini ci-dessus.

La phase huile continue de l'émulsion est principalement constituée par une huile liquide à la température ambiante et présentant un point d'ébullition compris entre 150 et 375° C, de préférence commerciale. Avantageusement, cette huile est soit une paraffine linéaire en $C_{10}$-$C_{13}$, soit une huile paraffinique-naphténique présentant un point d'ébullition de 200 à 350° C.

Une émulsion auto-reversible eau dans huile d'un copolymère cationique, insoluble dans l'eau renferme généralement un ou plusieurs émulsifiants de HLB (équilibre hydrophile-lipophile) supérieur à 8 dans la phase aqueuse et un ou plusieurs émulsifiants de HLB inférieur à 5 dans la phase huileuse.

La phase huileuse continue représente généralement 20 à 35 % en poids du poids total de l'émulsion, et renferme habituellement 1 à 4 % en poids d'émulsifiants.

Parmi les émulsifiants de valeur HLB inférieure à 5, on peut citer les esters gras de sorbitane, tels que le monooléate de sorbitane ou le sesquioléate de sorbitane. Parmi les émulsifiants de valeur HLB supérieure à 8, on peut citer les nonylphénols éthoxylés avec de 6 à 12 molécules d'oxyde d'éthylène, les alcools oléocétyliques éthoxylés avec de 10 à 12 molécules d'oxyde d'éthylène.

Pondéralement, les émulsions de la présente invention contiennent de préférence :

- environ 30 à 50 % d'eau,
- environ 25 à 35 % de copolymères cationiques réticulés,
- environ 20 à 35 % d'huile,
- 3 % à environ 8 % de plusieurs émulsifiants.

Les émulsions selon la présente invention peuvent être obtenus à partir de produits commerciaux par des procédés connus tels ceux décrits par la demanderesse dans le brevet français n° 2507606 dans lequel on remplace le système amorceur utilisé par celui décrit dans le brevet français n° 2529895. Comme enseigné dans l'art antérieur, les émulsifiants de valeur HLB supérieure à 8, sont introduits dans l'émulsion en fin de réaction de polymérisation, et ils ont pour but de stabiliser la dispersion d'une part, et de la rendre auto-reversible d'autre part. Par ailleurs, il est connu que le CMA ou le CHA sont des monomères cationiques très sensibles à l'hydrolyse, il est donc nécessaire, lorsqu'on les met en oeuvre dans une réaction de polymérisation, d'ajuster le pH de la phase aqueuse entre 3 et 6.

Les copolymères selon la présente invention, notamment sous forme d'émulsion, présentent d'excellentes propriétés épaississantes de dispersions aqueuses contenant des ammoniums quaternaires insolubles ou peu solubles dans l'eau, tels les assouplissants ménagers. Leur emploi sous forme d'émulsions ci-dessus décrites dans de telles dispersions à des doses pondérales comprises entre 0,05 et 1 % par rapport au poids total de la dispersion, conduit à des dispersions épaissies, peu sensibles au cisaillement, stables au stockage, peu filantes.

C'est pourquoi, la présente demande a enfin pour objet l'application d'un copolymère ou d'une émulsion auto-reversible, tel que ci-dessus décrits, à l'épaississement d'un assouplissant ménager.

Les exemples suivant illustrent l'invention.

## EXEMPLES 1-9

On a étudié le pouvoir épaississant de divers produits de l'invention sous forme d'émulsion, E, et leur influence sur la stabilité d'un assouplissant ménager commercial, désigné ci-après S. Cette étude est réalisée par addition de E dans S suivie d'un homogénéisation par agitation durant 15 minutes.

Dans le tableau I on a mentionné les valeurs de viscosités trouvées en fonction de la température et de la durée de stockage de l'assouplissant S dans lequel on a introduit un épaississant E à la concentration, C, indiquée. La notation OK signifie que le produit ne présente pas de dépôt solide. Les viscosités sont des viscosités Brookfield déterminées à 20° C avec un viscomètre Brookfield RVT, à la vitesse 20 et avec le mobile 2, et elles sont exprimées en mPa.s.

Les caractéristiques de l'émulsion E utilisée : composition molaire, concentration pondérale en copolymère désignée, Ce, taux de réticulation exprimé en ppm par rapport au poids total du copolymère, viscosité Brookfield de E à 20° C et son aspect après trois mois de stockage à 20° C, désigné As, sont mentionnés dans la deuxième partie du tableau.

La comparaison des exemples 1 à 3 montre que le produit contenant l' émulsion E la plus cationique (ex. 1) est le moins stable.

Par ailleurs, les émulsions E contenant un monomère cationique salifié avec de l'acide chlorhydrique induisent des problèmes de corrosion. On préfèrera donc les émulsions contenant un monomère cationique quaternisé.

La comparaison des exemples 4 (contre-exemple) et 5 montre qu'un polymère réticulé insoluble dans l'eau épaissit plus et donne des produits plus stables (ex. 5), et la comparaison des exemples 6 à 8 montre qu'un épaississant très cationique (ex. 8) conduit à un assouplissant ayant une stabilité de viscosité plus faible que celle des exemples 6 et 7.

EXEMPLES 10-16

Afin d'apprécier la stabilité au stockage des dispersions cationiques épaissies avec un produit selon l'invention, nous avons déterminé la viscosité Brookfield à 20° C (vitesse 20 tr/min, mobile 2) exprimée en mPa.s d'un assouplissant ménager traité avec divers produits selon l'invention à la dose indiquée exprimée en pourcentage pondéral en produit tel quel, d'une part en fonction du temps, et d'autre part, après un turbinage de 15 et de 30 minutes à 20° C, à une vitesse de 5200 tours par minute. Nous avons également étudié le comportement de cette dispersion cationique épaissie avec un produit selon l'invention lorsqu'elle est soumise à une centrifugation de 15000 tours par minute, 13000 G, pendant 30 minutes, à 20° C. La stabilité a été ensuite appréciée visuellement en fonction du taux de relargage et elle a été notée de 1 à 5, de très bonne 1 à très mauvaise 5. Les résultats de ces différents tests sont donnés dans les tableaux II et III.

Les résultats obtenus montrent qu'une dispersion cationique traitée avec une émulsion à base d'un copolymère cationique faiblement réticulé, n'entrant donc pas dans le cadre de la présente invention, (ex.14) présente une mauvaise stabilité à la centrifugation alors que les dispersions cationiques traitées avec une émulsion selon la présente invention présentent simultanément une bonne stabilité au stockage, au turbinage et à la centrifugation.

# TABLEAU I

| EXEMPLES | Témoin "S" | 1 | 2 | 3 | 4 | 5 | 6 | 7 | 8 | 9 |
|---|---|---|---|---|---|---|---|---|---|---|
| Concentration,C, | - | 0,25% | 0,15 % | 0,15 % | 0,3 % | 0,1 % | 0,15 % | 0,1 % | 0,07 % | 0,22 % |
| Viscosité | 86 | 214 | 265 | 245 | 232 | 242 | 244 | 219 | 234 | 270 |
| Viscosité après 2 mois à 20°C | 80 | 185 | 234 | 199 | 215 | 217 | 205 | 200 | 180 | * |
| Viscosité après 2 mois à 40°C | 100 | 164 | 210 | 190 | 180 | 170 | 190 | 175 | 140 | * |
| Aspect après 2 mois à 20°C | OK | striures | OK | OK | striures | OK | OK | OK | OK | * |
| Aspect après 2 mois à 40°C | OK | OK | OK | OK | OK | OK | OK | OK | OK | * |
| Composition (molaire) | | CHA 30/ AAM 70 | CHA 15/ AAM 85 | CHA 8/AAM 92 | CMA 30/AAM 70 | CMA 30/AAM 70 | CMA 8/AAM 92 | CMA 20/AAM 80 | CMA 55/AAM 45 | AAM 92/MAPTAC 8 |
| Ce | | 30 % | 27,5% | 28,4 % | 30 % | 30 % | 28,8 % | 30 % | 33 % | 30,4 % |
| Taux de réticulant | | - | 50 ppm | 100 ppm | - | 100 ppm | 100 ppm | 100 ppm | 100 ppm | 98 ppm |
| Viscosité de E à 20°C | | 600-1000 | 1230 | 1130 | 300 | 300 | 1000 | 1500 | 500 | 520 |
| As | | OK | OK | OK | OK | OK | OK | OK | OK | |

TABLEAU II

| Exemples | 10 | 11 | 12 | Témoin |
|---|---|---|---|---|
| Nature de E<br>Concentration | ex 1<br>0,3 % | ex 6<br>0,21 % | ex 7<br>0,15 % | -<br>- |
| Viscosité à 20° C | | | | |
| temps 0<br>après 1 h<br>après 2 h<br>après 4 h<br>après 48 h | 212<br>212<br>210<br>212<br>212 | 187<br>194<br>200<br>200<br>205 | 209<br>215<br>217<br>220<br>220 | 66<br><br><br><br>65 |
| Viscosité après turbinage | | | | |
| durant 15 min<br>durant 30 min | 204<br>207 | 180<br>184 | 194<br>197 | 29<br>29 |

TABLEAU III

| **Stabilité après centrifugation** | | | | | |
|---|---|---|---|---|---|
| Exemples | **13** | **14** | **15** | **16** | **Témoin** |
| Nature de E<br>Concentration<br>Appréciation | ex 1<br>0,2 %<br>2 | ex 4<br>0,35 %<br>4 | ex 6<br>0,06 %<br>1 | ex 7<br>0,2 %<br>1 | 0<br>0<br>1 |

EXEMPLE 17

On mélange à la température ambiante, sous agitation, 300 g d'eau bidistillée, 6,16 g d'acide citrique avec une molécule d'eau, 232,7 g (3,27 moles) d'acrylamide cristallisé, 72,65 g d'une solution aqueuse à 76 % en poids de CMA, soit 0,285 mole, 10 g d'une solution aqueuse à 0,29 % en poids d'ABAA, 0,288 g de chlorhydrate d'azobisamidinopropane, 0,92 g d'acide formique et 0,5 g d'une solution aqueuse à 40 % en poids de sel de sodium de l'acide diéthylènetriaminopentaacétique. On ajuste ensuite le pH de cette solution à pH = 3,5 avec quelques gouttes de lessive de potasse puis on introduit de l'eau jusqu'à l'obtention d'un poids total de 700 g.

Par ailleurs, on mélange sous agitation 19 g de sesquioléate de sorbitane dans 241 g d'une huile commerciale paraffinique-naphténique présentant un point d'ébullition de 300 à 350° C.

Dans un réacteur de polymérisation, on coule sous agitation la solution aqueuse préparée précédemment dans la phase huile obtenue ci-dessus, puis la dispersion est émulsifiée avec une turbine pendant quelques minutes et l'émulsion obtenue est ensuite soigneusement désoxygénée par un barbotage d'azote, pendant 30 minutes à 15° C. On introduit ensuite dans cette émulsion 0,0432 g d'hydropéroxyde de cumène et 0,0576 g de chlorure de thionyle. La réaction de polymérisation démarre aussitôt, la température du milieu réactionnel atteint 90° C en 15 minutes, on abandonne 1 heure à cette température sous agitation puis l'émulsion est refroidie à 50° C. A cette température on introduit 9 g d'alcool oléocétylique éthoxylé avec 10 molécules d'oxyde d'éthylène et 11 g d'alcool oléocétylique éthoxylé avec 12 molécules d'oxyde d'éthylène, puis on refroidit l'émulsion à la température ambiante. On obtient ainsi une émulsion contenant pondéralement 28,8 % d'un copolymère AAM-CMA, 92-8 en proportions molaires, réticulé avec 100 ppm par rapport au poids de ce copolymère d'acide bisacrylamidoacétique, présentant une viscosité Brookfield de 1000 mPa.s déterminée à 20° C avec un viscomètre Brookfield modèle VRT, équipé du mobile 2, à la vitesse 20. Cette émulsion est stable dans le temps ; après deux mois de stockage à 20° C, elle ne présente aucun relargage ni sédimentation.

Cette émulsion a été utilisée dans l'exemple 6.

## Revendications

**1.** Copolymères cationiques insolubles dans l'eau, caractérisés en ce qu'ils sont à base d'acrylamide et d'un monomère cationique de formule générale (I)

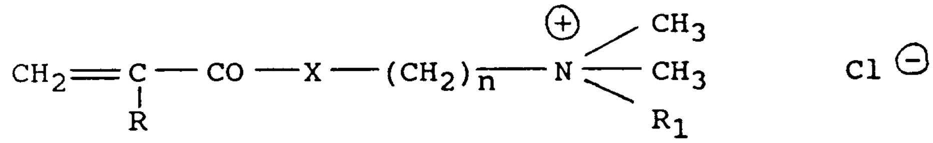

(I)

dans laquelle R et $R_1$, identiques ou différents, représentent un atome d'hydrogène ou un groupement méthyle, X représente un atome d'oxygène ou un radical NH et n représente 2 ou 3, contenant en proportions molaires de 5 à 30 % de motifs cationiques, et réticulés avec de 50 à 100 ppm d'acide bisacrylamidoacétique par rapport au poids du copolymère .

**2.** Copolymères cationiques selon la revendication 1 caractérisés en ce que le copolymère est réticulé avec environ 100 ppm d'acide bisacrylamidoacétique par rapport au poids de copolymère .

**3.** Copolymères cationiques selon la revendication 1 ou 2 caractérisés en ce que le monomère cationique est l'acrylate de diméthylaminoéthyle quaternisé au chlorure de méthyle.

**4.** Copolymères cationiques selon l'une quelconque des revendications 1 à 3 caractérisés en ce que le copolymère est un copolymère d'acrylamide et d'acrylate de diméthylaminoéthyle quaternisé au chlorure de méthyle contenant en proportions molaires 8 % de motifs cationiques.

**5.** Emulsion auto-reversible, eau dans huile, caractérisée en ce qu'elle renferme un copolymère cationique selon la revendication 1.

**6.** Emulsion auto-reversible, eau dans huile, caractérisée en ce qu'elle renferme un copolymère cationique selon la revendication 2 ou 3.

**7.** Emulsion auto-reversible, eau dans huile, caractérisée en ce qu'elle renferme un copolymère cationique selon la revendication 4.

**8.** Emulsion auto-reversible, eau dans huile, caractérisée en ce qu'elle renferme un copolymère cationique selon la revendication 5.

**9.** Application d'un copolymère selon l'une quelconque des revendications 1 à 4 à l'épaississement d'un assouplissant ménager.

**10.** Application d'une émulsion auto-reversible selon l'une quelconque des revendications 5 à 8 à l'épaississement d'un assouplissant ménager.

## Claims

**1.** Water-insoluble cationic copolymers, characterised in that they are based on acrylamide and a cationic monomer having the general formula (I)

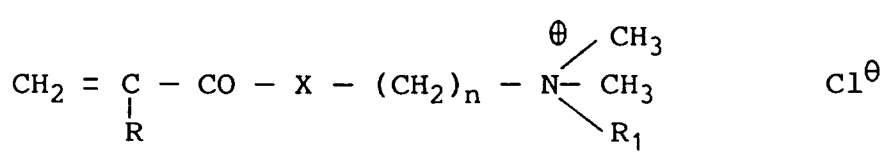

(I)

in which R and $R_1$, identical or different, represent a hydrogen atom or a methyl group, X represents an oxygen atom or an NH radical and n represents 2 or 3, containing in molar proportions 5 to 30% cationic units, and cross-linked with 50 to 100 ppm of bisacrylamidoacetic acid based on the weight of

the copolymer.

2. Cationic copolymers according to claim 1, characterised in that the copolymer is cross-linked with approximately 100 ppm bisacrylamidoacetic acid based on the weight of copolymer.

3. Cationic copolymers according to claim 1 or 2, characterised in that the cationic monomer is dimethylaminoethyl acrylate quaternised with methyl chloride.

4. Cationic copolymers according to any one of claims 1 to 3, characterised in that the copolymer is a copolymer of acrylamide and dimethylaminoethyl acrylate quaternised with methyl chloride containing in molar proportions 8% cationic units.

5. Auto-reversible water-in-oil emulsion, characterised in that it contains a cationic copolymer according to claim 1.

6. Auto-reversible water-in-oil emulsion, characterised in that it contains a cationic copolymer according to claim 2 or 3.

7. Auto-reversible water-in-oil emulsion, characterised in that it contains a cationic copolymer according to claim 4.

8. Auto-reversible water-in-oil emulsion, characterised in that it contains a cationic copolymer according to claim 5.

9. Application of a copolymer according to any one of claims 1 to 4 to the thickening of a household softener.

10. Application of an auto-reversible emulsion according to any one of claims 5 to 8 to the thickening of a household softener.

**Patentansprüche**

1. Wasserunlösliche kationische Copolymere, dadurch gekennzeichnet, daß sie auf Acrylamid und einem kationischen Monomer der allgemeinen Formel (I) basieren

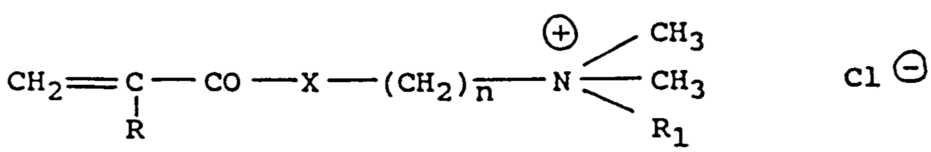

(I)

in welcher R und $R_1$, die identisch oder verschieden sein können, ein Wasserstoffatom oder eine Methylgruppe bedeuten, X ein Sauerstoffatom oder einen Rest NH bedeutet und n 2 oder 3 ist, mit einem Gehalt in molaren Verhältnissen von 5 bis 30 % kationischer Einheiten und vernetzt mit 50 bis 100 ppm Bisacrylamidoessigsäure, bezogen auf das Gewicht des Copolymers.

2. Kationische Copolymere nach Anspruch 1, dadurch gekennzeichnet, daß das Copolymer mit etwa 100 ppm Bisacrylamidoessigsäure, bezogen auf das Gewicht des Copolymers, vernetzt ist.

3. Kationische Copolymere nach Anspruch 1 oder 2, dadurch gekennzeichnet, daß das kationische Monomer das mit Methylchlorid quaternisierte Dimethylaminoethylacrylat ist.

4. Kationische Copolymere nach einem der Ansprüche 1 bis 3, dadurch gekennzeichnet, daß das Copolymer ein Copolymer von Acrylamid und dem mit Methylchlorid quaternisierten Dimethylaminoethylacrylat ist und in molaren Verhältnissen 8 % kationische Einheiten enthält.

5. Selbstreversible Wasser-in-Öl-Emulsion, dadurch gekennzeichnet, daß sie ein kationisches Copolymer nach Anspruch 1 einschließt.

**6.** Selbstreversible Wasser-in-Öl-Emulsion, dadurch gekennzeichnet, daß sie ein kationisches Copolymer nach Anspruch 2 oder 3 einschließt.

**7.** Selbstreversible Wasser-in-Öl-Emulsion, dadurch gekennzeichnet, daß sie ein kationisches Copolymer nach Anspruch 4 einschließt.

**8.** Selbstreversible Wasser-in-Öl-Emulsion, dadurch gekennzeichnet, daß sie ein kationisches Copoylmer nach Anspruch 5 einschließt.

**9.** Verwendung eines Copolymers nach einem der Ansprüche 1 bis 4 zum Eindicken eines Haushaltsweichspülers.

**10.** Verwendung einer selbstreversiblen Emulsion nach einem der Ansprüche 5 bis 8 zum Eindicken eines Haushaltsweichspülers.